## Europäisches Patentamt
## European Patent Office
## Office européen des brevets

(19)

(11) Publication number: **0 041 382 B1**

(12) **EUROPEAN PATENT SPECIFICATION**

(45) Date of publication of patent specification: 04.04.84

(51) Int. Cl.³: **B 23 Q 35/123**

(21) Application number: 81302398.3

(22) Date of filing: 01.06.81

(54) A three-dimensional tracer control apparatus.

(30) Priority: 03.06.80 JP 74832/80

(43) Date of publication of application:
09.12.81 Bulletin 81/49

(45) Publication of the grant of the patent:
04.04.84 Bulletin 84/14

(84) Designated Contracting States:
DE FR GB

(56) References cited:
FR - A - 2 420 403

(73) Proprietor: FANUC LTD
5-1, Asahigaoka 3-chome Hino-shi
Tokyo 191 (JP)

(72) Inventor: Ryoji, Imazeki
987-44, Naganuma-cho Hachioji-shi
Tokyo 192 (JP)
Inventor: Etuo, Yamazaki
566-93, Shimoongata-cho Hachioji-shi
Tokyo, 192-01 (JP)

(74) Representative: Billington, Lawrence Emlyn et al,
HASELTINE LAKE & CO Hazlitt House 28
Southampton Buildings Chancery Lane
London WC2A 1AT (GB)

Courier Press, Leamington Spa, England.

# A three-dimensional tracer control apparatus

The present invention relates to a three-dimensional tracer control apparatus, sometimes called a control system.

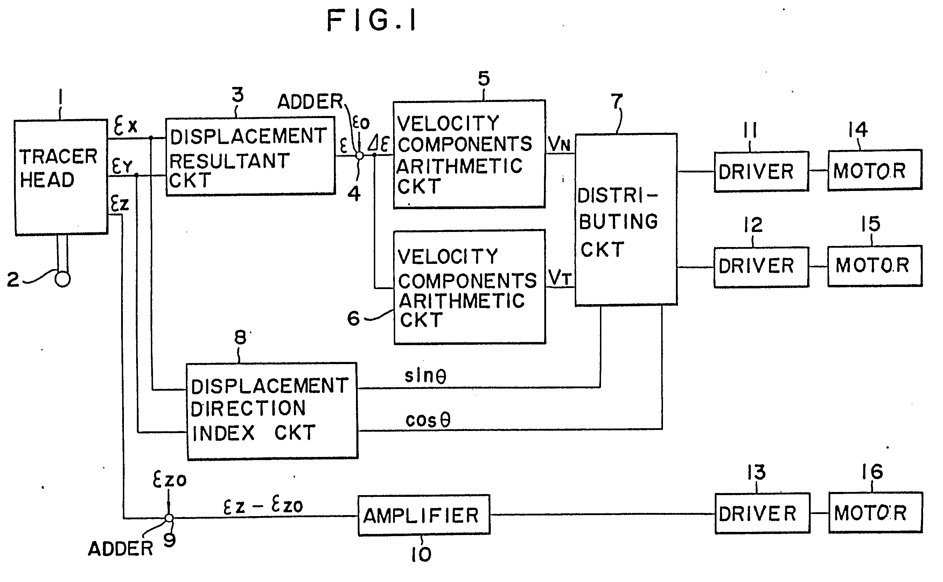

There has heretofore been put into practical use a three-dimensional tracer control system that traces the configuration of a model in the X—Y plane by X- and Y-axis direction displacement signals available from a tracer head, and controls the trace velocity in the Z-axis direction by a Z-axis direction displacement signal. Fig. 1 illustrates in block form an example of such a conventional system. In Fig. 1, reference numeral 1 indicates a tracer head; 2 designates a stylus; 3 identifies a displacement resultant circuit; 4 and 9 denote adders; 5 and 6 represent velocity components arithmetic circuits; 7 shows a distributing circuit; 8 refers to a displacement direction index circuit; 10 indicates an amplifier; 11 to 13 designate drivers; and 14 to 16 identify motors.

The tracer head 1 yields displacement signals $\varepsilon_x$, $\varepsilon_y$ and $\varepsilon_z$ corresponding to a displacement of the stylus 2 in the X-, Y- and Z-axis directions. The displacement signals $\varepsilon_x$ and $\varepsilon_y$ are provided to the displacement resultant circuit 3 and the displacement direction index circuit 8 and the displacement signal $\varepsilon_z$ is applied to the adder 9. The displacement resultant circuit 3 obtains a resultant displacement signal

$$\varepsilon = \sqrt{\varepsilon_x^2 + \varepsilon_y^2}$$

from the displacement signals $\varepsilon_x$ and $\varepsilon_y$ and applies it to the adder 4. The displacement direction index circuit 8 derives displacement direction signals $\sin\theta$ and $\cos\theta$ from the displacement signals $\varepsilon_x$ and $\varepsilon_y$ and provides them to the distributing circuit 7.

The adder 4 detects a difference $\Delta\varepsilon = \varepsilon - \varepsilon_0$ between the resultant displacement signal $\varepsilon$ from the displacement resultant circuit 3 and a reference displacement signal $\varepsilon_0$. The velocity components arithmetic circuits 5 and 6, which are supplied with the output from the adder 4, derive therefrom a normal-direction velocity signal $V_N$ and a tangential-direction velocity signal $V_T$, respectively, which are provided to the distributing circuit 7. Based on the normal-direction velocity signal $V_N$, the tangential-direction velocity signal $V_T$ and the displacement direction signals $\sin\theta$ and $\cos\theta$, the distributing circuit 7 produces velocity command signals in the X- and Y-axis directions by which the difference $\Delta\varepsilon$ between the resultant displacement signal $\varepsilon$ and the reference displacement signal $\varepsilon_0$ is reduced to zero. The velocity command signals are applied to the drivers 11 and 12, which drive the motors 14 and 15 in response to the velocity command signals.

The adder 9, which is supplied with the displacement signal $\varepsilon_z$, detects a difference $\varepsilon_z - \varepsilon_{z0}$ between it and a reference displacement signal $\varepsilon_{z0}$. The difference $\varepsilon_z - \varepsilon_{z0}$ thus obtained is applied via the amplifier 10 to the driver 13, causing it to drive the motor 16 which performs the Z-axis control. By driving the motors 14 to 16 in the manner described above, the tracer head 1 and a cutter (not shown) are fed together to achieve machining operations of a work (not shown).

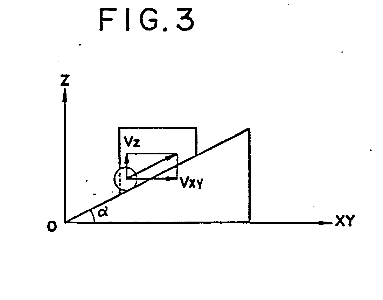

Now, consider tracing of such a slope as shown in Fig. 3 which has an angle of inclination $\alpha$. In this case, assuming that the trace velocity in the X—Y plane is $V_{XY}$, it is necessary that the trace velocity $V_z$ in the Z-axis direction be as follows:

$$V_z = V_{XY} \cdot \tan\alpha \qquad (1)$$

By the way, in the conventional three-dimensional tracer control system, since the trace velocity $V_z$ in the Z-axis direction is in proportion to the difference $(\varepsilon_z - \varepsilon_{z0})$ between the displacement signal $\varepsilon_z$ and the reference displacement signal $\varepsilon_{z0}$ in the Z-axis direction, the Z-axis velocity $V_z$ is given by the following expression (2):

$$V_z = K(\varepsilon_z - \varepsilon_{z0}) \qquad (2)$$

where K is a proportional constant.

From expressions (1) and (2), the displacement signal $\varepsilon_z$ in the Z-axis direction becomes as follows:

$$\varepsilon_z = \frac{V_{XY} \cdot \tan\alpha}{K} + \varepsilon_{z0} \qquad (3)$$

As is evident from expression (3), the displacement signal $\varepsilon_z$ in the Z-axis direction varies with a change in the feed rate $V_{XY}$ in the X—Y plane or the angle of inclination $\alpha$, resulting in variations in machining accuracy. In other words, the prior art tracer control system has the defects of inaccurate machining operations and degraded traceability in the X—Y plane.

It has been proposed to employ an integrating circuit for providing increased accuracy in a generalized control loop. Thus see French Patent Specification 2 420 403.

According to the present invention there is provided a three-dimensional tracer control apparatus which is operable to control tracing of the configuration of a model in the X—Y plane in dependence upon X- and Y-axis direction displacement signals derived from a tracer head and to control trace velocity in the Z-axis direction in dependence upon a Z-axis direction displacement signal, said control apparatus comprising:
trace velocity control means, for the Z-axis direction, whereby the trace velocity in the Z-axis direction can be controlled in dependence upon the Z-axis direction displacement signal when the control apparatus is in use, the control apparatus being characterised by:

an integration circuit for integrating the difference between said Z-axis direction displacement signal and a Z-axis reference displacement signal; and

an adder for adding together said difference and the output from said integration circuit, the adder being connected to the Z-axis direction trace velocity control means whereby the trace velocity in the Z-axis direction can be controlled in accordance with the output signal from said adder when the control apparatus is in use.

An embodiment of the present invention may provide a three-dimensional tracer control system with which it is possible to obtain a high degree of machining accuracy.

There may be provided a three-dimensional tracer control system which permits tracing in a state in which the displacement signal and the reference signal in the Z-axis direction are held substantially equal to each other.

For a better understanding of the present invention and to show how it may be put into practice, reference will now be made by way of example to the accompanying drawings in which:

Fig. 1 is a block diagram showing a prior art example;

Fig. 2 is a block diagram illustrating an embodiment of the present invention; and

Fig. 3 is a diagram explanatory of the operation of each of the prior art example shown in Fig. 1 and the embodiment of the present invention depicted in Fig. 2.

Figure 1 has already been described in detail.

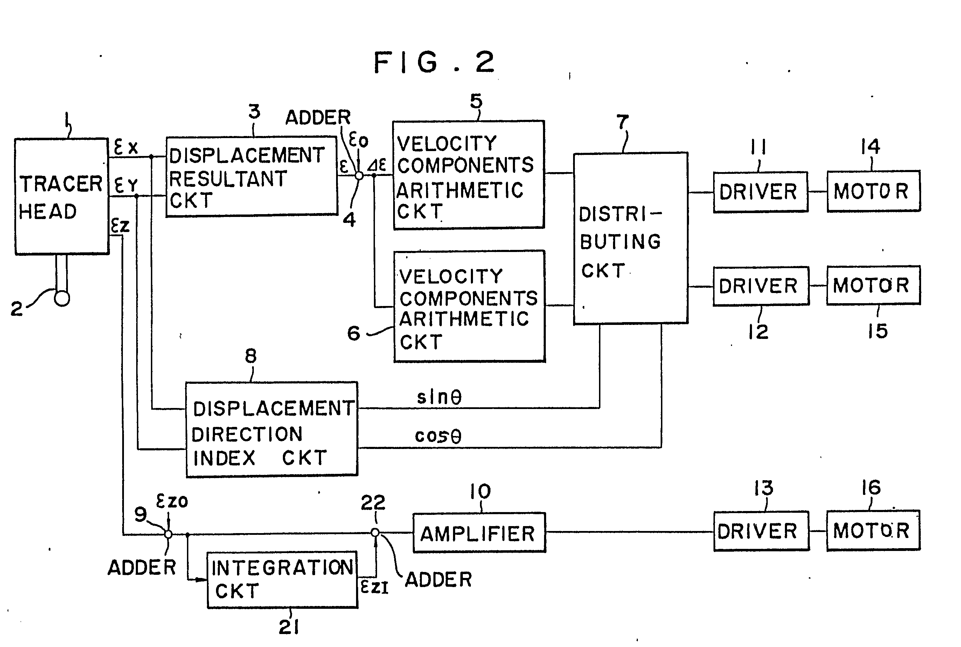

The embodiment of the present invention illustrated in Fig. 2 differs from the prior art example of Fig. 1 in the provision of an integration circuit 21 for integrating the output $(\varepsilon_z - \varepsilon_{z0})$ from the adder 9, and an adder 22 for adding together the output $\varepsilon_{zI} = \int(\varepsilon_0 - \varepsilon_{z0})dt$ from the integration circuit 21 and the output from the adder 9. In Fig. 2 the parts corresponding to those in Fig. 1 are identified by the same reference numerals.

Accordingly, in this embodiment the trace velocity $V_z$ in the Z-axis direction is given by

$$V_z = K(\varepsilon_z - \varepsilon_{z0} + \varepsilon_{zI}) \qquad (4)$$

where K is a proportional constant.

Assuming that the slope such as shown in Fig. 3 is traced at the velocity $V_{XY}$ (which is the trace velocity in the X—Y plane), it is necessary that the trace velocity $V_z$ in the Z-axis direction be such as given by expression (1), as mentioned previously; accordingly, the displacement signal $\varepsilon_z$ in the Z-axis direction becomes, from expressions (1) and (4), as follows:

$$\varepsilon_z = \frac{V_{XY} \cdot \tan\alpha}{K} + \varepsilon_{z0} - \varepsilon_{zI} \qquad (5)$$

where $\varepsilon_0 - \varepsilon_{z0} \neq 0$, the output $\varepsilon_{zI} = \int(\varepsilon_0 - \varepsilon_{z0})dt$ from the integration circuit 21 approaches

$$\frac{V_{XY} \cdot \tan\alpha}{K}$$

so that

$$\varepsilon_{zI} = \frac{V_{XY} \cdot \tan\alpha}{K} ;$$

therefore, tracing can be conducted with $\varepsilon_z = \varepsilon_{z0}$, thus increasing the degree of machining accuracy.

As has been described in the foregoing, the present embodiment is provided with the integration circuit for integrating the difference between the displacement signal and the reference signal in the Z-axis direction, and the adder for adding together the above-said difference and the output from the integration circuit. The trace velocity is controlled in the Z-axis direction in accordance with the output from the adder, so that tracing can be performed with the displacement signal and the reference signal in the Z-axis direction held substantially equal to each other. Accordingly, the present embodiment possesses the advantage of increased machining accuracy.

It will be apparent that many modifications and variations may be effected without departing from the scope of the invention as defined by the following claims.

## Claims

1. A three-dimensional tracer control apparatus which is operable to control tracing of the configuration of a model in the X—Y plane in dependence upon X- and Y-axis direction displacement signals derived from a tracer head (1) and to control trace velocity in the Z-axis direction in dependence upon a Z-axis direction displacement signal, said control apparatus comprising:

trace velocity control means (10), for the Z-axis direction, whereby the trace velocity in the Z-axis direction can be controlled in dependence upon the Z-axis direction displacement when the control apparatus is in use, the control apparature being characterised by:

an integration circuit (21) for integrating the difference between said Z-axis direction displacement signal and a Z-axis reference displacement signal; and

an adder (22) for adding together said difference and the output from said integration circuit (21), the adder (22) being connected to the Z-axis direction trace velocity control means (10) whereby the trace velocity in the Z-axis direction can be controlled in accordance with the output signal from said adder (22) when the control apparatus is in use.

2. A control apparatus according to claim 1, when in operable combination a three-dimensional tracer apparatus comprising a tracer head.

### Patentansprüche

1. Dreisdimensionale Nachlaufsteuervorrichtung, die so betreibbar ist, daß das Nachlaufen der Konfiguration eines Modells in der X—Y-Ebene in Abhängigkeit von X- und Y-Achsen-Richtungsverschiebungssignalen gesteuert wird, die von einem Nachlaufkopf (1) erhalten werden, und daß die Nachlaufgeschwindigkeit in der Z-Achsen-Richtung in Abhängigkeit von einem Z-Achsen-Richtungsverschiebungssignal gesteuert wird, mit einer für die Z-Achsen-Richtung vorgesehenen Nachlauf-Geschwindigkeitssteuereinrichtung (10), durch die die Nachlaufgeschwindigkeit in der Z-Achsen-Richtung in Abhängigkeit von dem Z-Achsen-Richtungsverschiebungssignal in dem Fall gesteuert werden kann, daß die Steuervorrichtung, in Gebrauch ist, dadurch gekennzeichnet, daß eine Integrationsschaltung (21) vorgesehen ist, welche die Differenz zwischen dem Z-Achsen-Richtungsverschiebungssignal und einem Z-Achsen-Bezugsverschiebungssignal integriert, und daß ein Addierer (22) vorgesehen ist, der die Differenz und das Ausgangssignal von der Integrationsschaltung (21) her addiert und der mit der für die Z-Achsen-Richtung vorgesehenen Nachlauf-Geschwindigkeitssteuereinrichtung (10) verbunden ist, derart, daß die Nachlaufgeschwindigkeit in der Z-Achsen-Richtung in Übereinstimmung mit dem Ausgangssignal von dem Addierer (22) her in dem Fall gesteuert werden Kann, daß die Steuervorrichtung in Gebrauch ist.

2. Steuervorrichtung nach Anspruch 1 in einer betriebsfähigen Kombination mit einer einen Nachlaufkopf umfassenden dreidimensionalen Nachlaufvorrichtung.

### Revendications

1. Un dispositif de commande de copiage tridimensionnel qu'on peut faire fonctionner de façon à commander la vitesse de copiage de la configuration d'un modèle dans le plan X—Y sous la dépendance de signaux de déplacement dans le directions de l'axe X et de l'axe Y, obtenus à partir d'un palpeur (1), et pour commander la vitesse de copiage dans la direction de l'axe Z sous la dépendance d'un signal de déplacement dans la direction de l'axe Z, ce dispositif de commande comprenant:

des moyens de commande de vitesse de copiage (10), pour la direction de l'axe Z, par lesquels on peut commander la vitesse de copiage dans la direction de l'axe Z sous la dépendance du signal de déplacement dans la direction de l'axe Z, lorsque le dispositif de commande est utilisé, le dispositif de commande étant caractérisé par:

un circuit d'intégration (21) destiné à intégrer la différence entre le signal de déplacement dans la direction de l'axe Z et un signal de déplacement de référence pour l'axe Z; et

un additionneur (22) destiné à additionner ensemble ladite différence et le signal de sortie du circuit d'intégration (21), l'additionner (22) étant connecté aux moyens de commande de la vitesse de copiage dans la direction de l'axe Z (10), grâce à quoi on peut commander la vitesse de copiage dans la direction de l'axe Z conformément au signal de sortie de l'additionneur (22), lorsque le dispositif de copiage est utilisé.

2. Un dispositif de commande selon la revendication 1, associé fontionnellement à un dispositif de copiage tridimensionnel comprenant un palpeur.

# F I G . I

TRACER HEAD 1

$\varepsilon x$
$\varepsilon Y$
$\varepsilon z$

2

DISPLACEMENT RESULTANT CKT 3

ADDER
$\varepsilon_0$
$\varepsilon$
$\Delta\varepsilon$
4

VELOCITY COMPONENTS ARITHMETIC CKT 5

$V_N$

VELOCITY COMPONENTS ARITHMETIC CKT 6

$V_T$

DISTRI-BUTING CKT 7

DRIVER 11 — MOTOR 14

DRIVER 12 — MOTOR 15

DISPLACEMENT DIRECTION INDEX CKT 8

$\sin\theta$
$\cos\theta$

$\varepsilon_{ZO}$
$\varepsilon_Z - \varepsilon_{ZO}$
ADDER 9

AMPLIFIER 10

DRIVER 13 — MOTOR 16

0 041 382

FIG. 2

# FIG.3